# EUROPEAN PATENT SPECIFICATION

(11) **EP 1 771 025 B1**
(45) Date of publication and mention of the grant of the patent: **13.03.2013**
(21) Application number: 06019401.6
(22) Date of filing: 15.09.2006
(51) Int. Cl.: H04W 4/02

(54) **Location dependent adressing for GSM-R systems**
Ortsabhängige Adressierung für GSM-R Systeme
Adressage basé sur la localisation pour un système GSM-R

(30) Priority: 30.09.2005 US 239346
(43) Date of publication of application: 04.04.2007
(73) Proprietor: Kapsch CarrierCom France S.A.S., 75001 Paris (FR)
(72) Inventor: Heaven, Thomas, Manotick Ontario K4M 1E6 (CA); Currie, Darin, Ottawa Ontario K17 5B6 (CA); Altwein, Thomas, Immenstaad 88090 (DE); Kania, Jason, Unit 502 Ottawa Ontario K1S 5N3 (CA)
(74) Representative: Weiser, Andreas

(56) References cited:
- EP-A- 0 952 744
- WO-A-00/51267
- LIAO MIN, ZHONG ZHANGDUI - MODERN COMMUNICATION INSTITUTE: "Location dependent addressing using GSM-R cellular positioning" PROCEEDINGS OF 16TH INTERNATIONAL CONFERENCE ON COMMUNICATION TECHNOLOGY, vol. 1, 2000, pages 748-753, XP002457862 Beijing, China
- A F NEELE, A T G WOOTTON: "GSM-R System procurement guide" ERTMS, [Online] 23 May 2003 (2003-05-23), XP002457863 Retrieved from the Internet: URL:http://gsm-r.uic.asso.fr/docs/implemen tation/procurement_guide.pdf> [retrieved on 2007-11-06]

## Description

### Field of the Invention

The invention relates to location-based addressing, for example for application to GSM-R (Groupe Special Mobile-Rail) applications.

### Background of the Invention

GSM-R is a variant of GSM that has been developed for rail operations. It extends existing GSM by adding new frequencies and parameters etc. for use by railroad operators, and provides a new customer base for GSM platforms. Before GSM-R, it was common to have multiple different communication standards being used in a railroad yard, for example yard workers, engineers and controllers might be operating with handsets using different standards. GSM-R is an effort to standardize the communications used across Europe for railroad communications.

One of the requirements of the GSM-R network is that location dependent addressing must be made available. Through location dependent addressing, a caller is capable of dialing a special short code that is associated with a particular function, for example a dispatcher. The location dependent addressing system is responsible for determining the nearest party that meets that functional description, i.e. the nearest dispatcher. The call is then connected through to that nearest dispatcher. Originally, it was thought that location information in the form of a cell identifier that identifies the cell that the caller resides in would be sufficient. This would be true assuming that the location dependent service is common within an entire cell. However, it was recognized that there was a general industry problem with using only the cell identifier for location information. More precision was needed. This is because in some systems, typical cells might be six kilometers in radius, and this is not precise enough. For example there might be 25 train tracks in a train station and there may be different dispatchers assigned for different train tracks. In such a case, the location information would need to be precise enough to be associated with a particular train track. eLDA (enhanced location dependent address) is the industry's response to this requirement for more precision. eLDA specifies mechanisms for transmitting more detailed location information through the network. With eLDA, the entity responsible for looking up the location dependent address is now given more information than just the cell identifier.

It has been recognized that GPS (global positioning system) data might be useful in this context. The standard as implemented today specifies that upon dialing one of a set of stipulated short codes, GPS co-ordinates are connected from the dialing party and transmitted to a function responsible for performing a location dependent addressing. The cell identifier is also included. The system is then responsible for determining the appropriate location dependent party to handle the call. The standard is silent as to how the GPS data is used in implementing this function.

International patent application publication WO 00/51267 discloses a method for determining whether a location associated with a wireless station, such as a cellular telephone, is located within an area of interest. The area of interest is defined using a quadtree representation of an area that includes the area of interest and identifying nodes within the quadtree that represent the area of interest. By iterative comparison of the location associated with the wireless station to the locations associated with a node at each level of the quadtree, a determination can be made as to whether or not the location associated with the wireless station is within the area of interest.

A publication entitled "location dependent addressing using GSM-R cellular positioning" by Liao Min and Zhong Zhangdui, Proceedings of the 16th International Conference on Communication Technology, vol. 1, 2000, pages: 748 - 753 analyzes the possibility of using GSM-R positioning in LDA (location dependent addressing). The characteristic of GSM-R compatible with cellular positioning is given. A location system model as well as positioning techniques suitable for a GSM-R system are presented.

A publication entitled "GSK-R System Procurement Guide" by A F Neele and A T Wootton, 23 May 2003, provides an overview of GSM-R and gives a single point reference for all of the relevant documentation. The publication further describes various design options available and how these implementations can be made to result in an interoperable EIRENE (European integrated railway enhanced network) compliant system. The publication also provides guidance on issues, which have an effect on implementation and interoperability, but are not comprehensively covered in the EIRENE specifications.

### Summary of the Invention

According to one broad aspect, the invention provides a method comprising receiving a call setup request requesting a connection between a calling device and a location dependent functional entity; looking up connection information to a particular intrance of the location dependent functional entity as a function of location of the calling device; using the connection information for initiating the establishment of a connection between said calling device and said instance of the location dependent functional entity, wherein, at least one location dependent functional entity storing a plurality of hierarchical spatial representations in the form of quadtrees each defining different connection information using the cell identifier of the call the calling device resides in which of the plurality of quadtrees to use. in said step of looking up

In some embodiments, information, identifying the particular location dependent functional entity is identified by a GSM-R short code.

In some embodiments, the information identifying the particular location comprises latitude and longicude information.

In some embodiments, storing the quadtree comprises storing higher resolution nodes in the quadtree for areas where a higher resolution location-based lookup is to be provided.

In some embodiments, the method as summarized above implemented in a service control point.

According to another broad aspect, the invention provides a system comprising the features of claim 6.

In some embodiments, the hierarchical spatial representation-based lookup function is implemented in a service control point.

In some embodiments, the system is a GSM-R system.

### Brief Description of the Drawings

Preferred embodiments of the invention will now be described with reference to the attached drawings in which:
Figure 1 is a schematic diagram of a system provided by an embodiment of the invention employing quadtree-based lookup;
Figure 2 is an example of a map that has been divided into polygons and stored using a quadtree;
Figure 3 shows the map of Figure 2 as part of a larger overall map;
Figure 4 shows an example of a call flow for performing dispatcher lookup as provided by an embodiment of the invention;
Figure 5 is a system diagram of an example GSM-R network;
Figures 6A and 6B are detailed examples of how 8 x 8 and 16 x 16 pixel graphics can be stored efficiently using a quadtree;
Figure 7 is a flowchart of an example method of using a hierarchical spatial representation to lookup a value of a location dependent information element; and
Figure 8 is an example of a data structure for storing the quadtree of Figure 6A.

### Detailed Description of the Preferred Embodiments

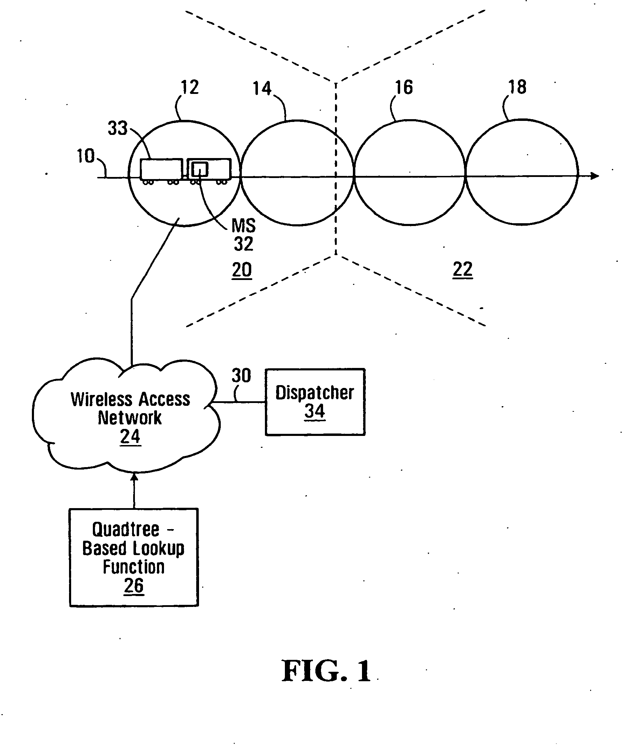

Referring now to Figure 1, shown is a schematic view of an example system employing quadtree-based lookup to deliver location dependent addressing provided by an embodiment of the invention. Shown is a train track 10 passing through a series of cells 12,14,16,18 that line the track 10. The cells 12,14,16,18 form part of a wireless access network 24. Also shown are two dispatcher jurisdictions 20,22. It can be seen that part of the track 10 is located within jurisdiction 20 and part of the track is located within jurisdiction 22, and that the boundaries of the dispatcher jurisdictions are not generally in common with boundaries of the cells. A mobile station 32 equipped with a GPS (global positioning system) capability or some other location determining capability is shown travelling on a train 33 within cell 12. The details of the access infrastructure within the cells 12,14,16,18 forming part of the wireless access network 24 are not shown. Also shown is a quadtree-based lookup function 26 in communication with and/or forming part of the wireless access network 24. Also shown is a dispatcher 34 in communication with the wireless access network 24 through connection 30.

In operation, when a new call is originated by a user within one of the cells (for example using mobile station 32 within cell 12), the request is received by the wireless access network 24. For example, if the call is an eLDA call, the call is originated to a short code, and the request includes both the short code associated with a request for a dispatcher and the GPS latitude and longitude. More generally, the request includes location information and something that can be associated with a particular location dependent information element, as detailed below. The wireless access network 24 sends a query for the location dependent destination of the call using the short code and the latitude and longitude to the quadtree-based lookup function 26 (more generally, to a hierarchical spatial representation lookup function as detailed below).

In some embodiments, the query also includes a coarse location identifier such as a cell identifier. This can either be included in the original call by the mobile station, or added by the network, for example by base stations, base station controllers (not shown), a mobile switching centre or other network elements. The quadtree-based lookup function 26 responds with the appropriate destination, and the wireless access network 24 then sets up connection 30 to the appropriate dispatcher 34. It is of course to be understood that many of the interconnections are logical in Figure 1 and there may be other intervening infrastructures.

Preferably, the quadtree-based lookup function is broken down along geographical boundaries, for example by providing one quadtree-based lookup function per country. Note that while in the illustrated example, the location dependent addressing function is provided in the quadtree-based lookup function that is shown distinct from the wireless access network, more generally it can be provided in any appropriate manner that may or may not form part of the wireless access network, for example in a switch. The quadtree-based lookup function 26 is responsible for taking the location information and the short code, and determining the appropriate target. For the particular example illustrated, it is assumed that it is a dispatcher that is being requested (the current standard stipulates that short code 1200 is used to request a dispatcher). The two jurisdictions 20,22 in Figure 1 are assumed to be for dispatchers. As such, the quadtree-based lookup function 26 is responsible for determining which of the jurisdictions 20,22 (more generally there would be a larger number) the caller is located in, and then mapping that to an appropriate dispatcher, and returning this information to the wireless access network 24. In the illustrated example, dispatcher 34 is the current destination for calls within jurisdiction 20.

A new method of mapping location information to jurisdiction is implemented by the quadtree-based lookup function 26. In the description that follows, the jurisdictions are assumed to be dispatcher jurisdictions. However, in a given implementation, the jurisdiction can be application dependent, and in fact there can be multiple different jurisdictions that are defined for different functional entities that may be co-extensive for some functions, or completely independent. In the GSM-R application, it is the short code that specifies which functional entity is being requested. More generally, other methods of requesting a particular functional entity can be employed. For example, a full telephone number, instant message URI, SIP address associated with the bearer or media type could be used.

Furthermore, more generally, once the jurisdiction is determined, this information can be used for more than just setting up a voice call. For example, it can be used for establishing a FAX or data call, directing an SMS or an IM, or establishing an IP or a SIP connection. Any value which unambiguously identifies a network element could be used.

To begin, the method by which a geographical coverage area is efficiently stored in a data structure for lookup purposes will be described.

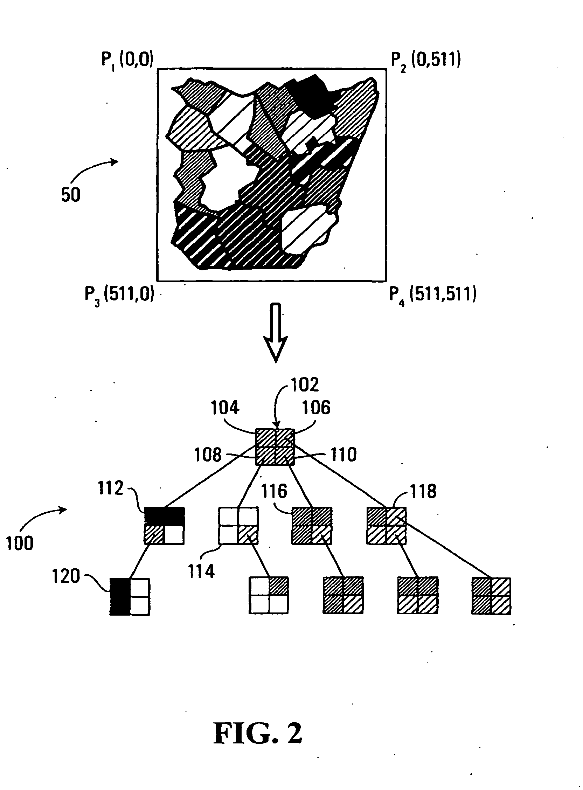

Referring to Figure 2, shown is an example of a coverage area that will be used for the purpose of describing how the data structure is generated. The coverage area falls within four corners P₁,P₂,P₃,P₄ each having associated latitude and longitude. The region is divided into polygons that follow jurisdictional boundaries. In the illustrated example, it can be seen that there are 16 polygons defining 16 different jurisdictions. Typically, the jurisdictions are defined by the operator since the operator will be responsible for deciding where jurisdiction will lie. There might be a different map such as the one shown in Figure 2 for different functional entities. For example there might be a first map for dispatchers, and a second map for power controllers, etc., that represents the same geographical area.

For the purpose of graphical rendering, each polygon is assigned a respective colour or other graphically unique display characteristic. As such, the 16 polygons shown in Figure 2 are each shown with a different colour, although for the purpose of a black and white figure, different hatchings are shown. Each colour is directly associated with a respective jurisdiction, e.g. a respective dispatcher jurisdiction. Because of the unique color associated with each jurisdiction within the overall geographical region, jurisdictions with disjoint regions can also be supported. Generally, each region can be disjoint or contiguous.

The information is stored using a quadtree. A quadtree is a mapping approach that progressively refines a map area into increasingly small quadrants until an entire quadrant is covered by one colour. The mapping of polygons into quadtrees provides storage compression and lookup speed as will be described in further detail below. Quadtrees are explained in detail in Irene Gargantini, "An Effective Way to Represent Quadtrees", Communication of the ACM, Vol. 25, No. 12, pp 905-910, 1982, No. 12, pp 905-910, 1982 , and in Hana Samet, "The Quadtree and Related Hierarchical Data Structures, ACM Computing Survey, vol. 16, no. 2, pp 187-260, 1984.

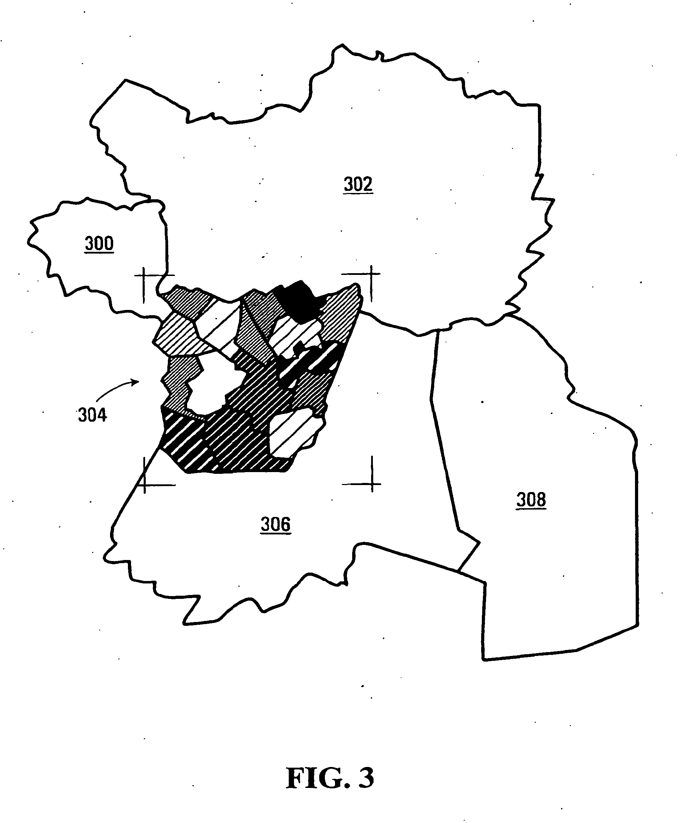

To begin, the map of Figure 2 is mapped to an associated graphic consisting of rows of pixels, each pixel having a colour corresponding to the polygon region in which it resides. The resolution of the graphic, combined with the precision of the GPS co-ordinates, will define the resolution of the location lookup capability. For the purpose of example, it is assumed that the graphic in Figure 2 is mapped to a 512 x 512 pixel graphic. Each pixel has (x,y) coordinates. Corner P1 is associated with (0,0), corner P2 is associated with (0,511), corner P3 is associated with (511,0), and corner P4 is associated with (511,511). For the region indicated in Figure 3 described below, an area one third the width and one third the height of France or approximately 250 km by 250 km, a low resolution image of 500 by 500 pixels would allow resolution to an area of 500m by 500m. An overlay map of 1.8 km by 1.8 km for each area containing a train yard could be represented by a graphic of 600 by 600 pixels in order to support a 3 meter resolution that is desirable for locations within the train yard.

A simple example of a quadtree is indicated at 100 in Figure 2. Note the quadtree of Figure 2 is shown to illustrate how quadtrees work, and does not map to the graphic 50. The top node 102 covers the whole graphic 50 and is shown divided into four quadrants 104,106,108,110. The four quadrants are defined in terms of the pixels that made up the graphic. Thus, the quadrant 104 is defined by upper left and lower right corners (0,0) and (255,255) respectively. The other quadrants are similarly defined.

For each quadrant, if the entire area of the quadrant is assigned a single colour for all pixels in the quadrant, then the encoding of that quadrant is complete. On the other hand, if the particular quadrant does not have a single colour associated with it, then that quadrant is broken down again into four further quadrants. In the illustrated example, each of the four quadrants 104,106,108,110 of the top node 102 has been broken down into four quadrants in respective second-level nodes 112,114,116,118. For a second-level node 112, it can be seen that the top two quadrants are all one colour, and as such the encoding of these quadrants is done. Similarly, the lower right quadrant of that node 112 is also one colour and as such the encoding of that node is done. For the remaining quadrant of node 112, a third-level node 120 divides that quadrant into four further quadrants as shown. A similar process is repeated for each second-level node with each tree branch ending when each quadrant is coloured by only a single colour.

Once the information has been encoded into a quadtree as defined above, a latitude and longitude of a calling party can be used to very efficiently lookup the jurisdiction associated with the caller's location.

The quadtree allows a complex data structure (in this case, a geographical map of jurisdictions) to be efficiently and compactly stored, minimizing the data requirements.

Furthermore, GSM-R networks typically have strict call set-up duration guidelines. Fast lookup of dispatchers from GPS co-ordinates would be advantageous in reducing call set-up times. Using quadtrees allows the number of recursions to be reduced/minimized, and provides a time-efficient method of looking up dispatcher information during an e-LDA call.

By specifying the number of pixels in a given map, this solution allows maps of variable granularity. Furthermore, in this solution, maps may overlap. Train operators can therefore have a map specifying a large part of a country side with more granular maps showing detailed areas in areas such as switching yards or train stations. As well, at any quadrant of the quadtree node, a submap with finer pixel resolution may also be referenced such that all child nodes of the node containing the map reference will resolve to the finer level of detail. This is the second of the two methods provided for allowing arbitrary levels of detail without requiring overly large graphics to represent a region.

Typically, a coarse location indicator, for example a cell identifier, could be used to determine which map to use when there are multiple maps. For example, the map of Figure 2 may form part of a larger area such as illustrated in Figure 3. In this case, the larger area is the country of France and is shown divided into five different areas/maps 300,302,304,306,308. The differing maps may be stored with differing resolution to allow more or less detail as may be required. In the event maps overlap, the coarse location identifier can be used to select between the maps in the area of overlap.

More generally, the selection of which map to choose can be either determined using additional information from the initial request received or from the contents of the quadtree based on a map reference existing at a particular quadtree node.

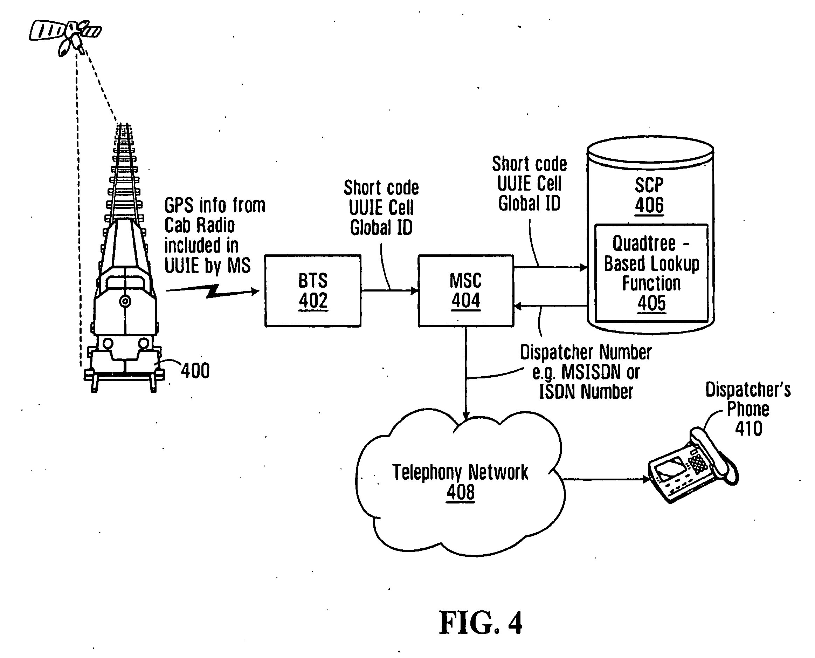

Referring now to Figure 4, shown is a particular example of a detailed call flow provided by an embodiment of the invention. Call flow steps are shown implemented between a mobile station, in this case a cab radio 400 equipped with GPS, a wireless network consisting of a base station and/or base station controller (BTS/BSC) 402 and a mobile switching centre 404, and a quadtree-based lookup function 405 implemented in an SCP (service control point) 406. Also shown is a telephony network 408 and a dispatcher's telephone 410. To begin, when an operator of the cab radio 400 dials a short code, GPS information is obtained and included in the UUIE (user to user information element) that is transmitted to the BTS/BSC 402. The BTS/BSC 402 forwards a call set-up request to the MSC 404 containing the short code and the GPS information. The MSC 404 then sends a query to the SCP 406. The query contains the location information consisting of a cell identifier, and the UUIE contents that among other things includes the GPS information.

Next, the SCP 406 decodes the UUIE contents to obtain the GPS information. The SCP uses the short code and the cell identifier to identify the appropriate map to select. Once the map is selected, the quadtree lookup is performed in order to determine the corresponding dispatcher. The SCP then directs the MSC 404 to route the call to that dispatcher's telephone number. In the illustrated example, this takes place through telephony network 408.

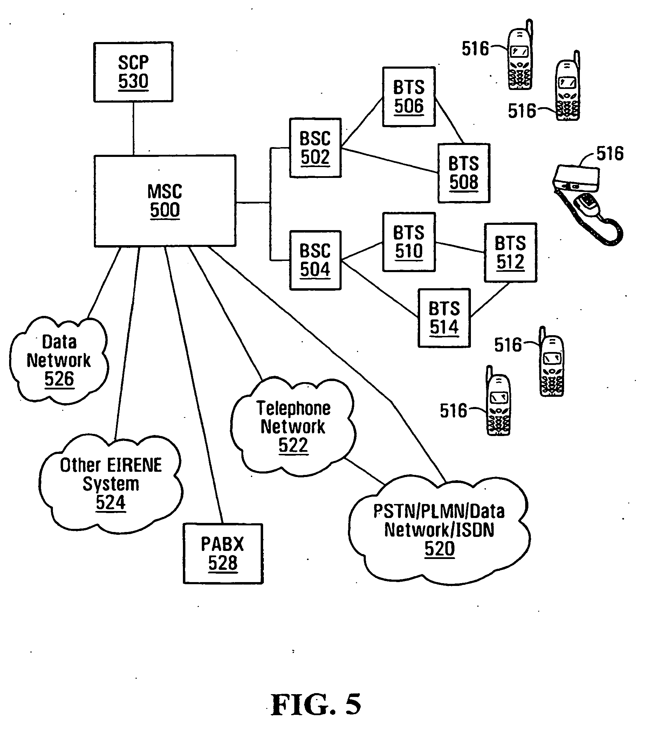

For the purpose of context, an example of a GSM-R network is shown in Figure 5. There is a mobile switching centre 500 and two base station controllers 502,504. Base station control 502 is servicing base stations 506,508 and base station controller 504 is shown servicing base stations 510,512,514. Each base station has a respective wireless coverage area. In the illustrated example, shown are a series of radios 516 in the coverage areas of the base stations. The mobile switching centre 500 might also have other connectivity for allowing the GSM-R system to be connected to other networks such as the PSTN (Public Switch Telephone Network) 520, telephone network 522, other EIRENE (European Integrated Railway Radio Enhanced Network) system 524, data network 526, or a PABX (Private Automatic Branch Exchange) 528. Also shown is an SCP 530 that is responsible for performing the location dependent lookups.

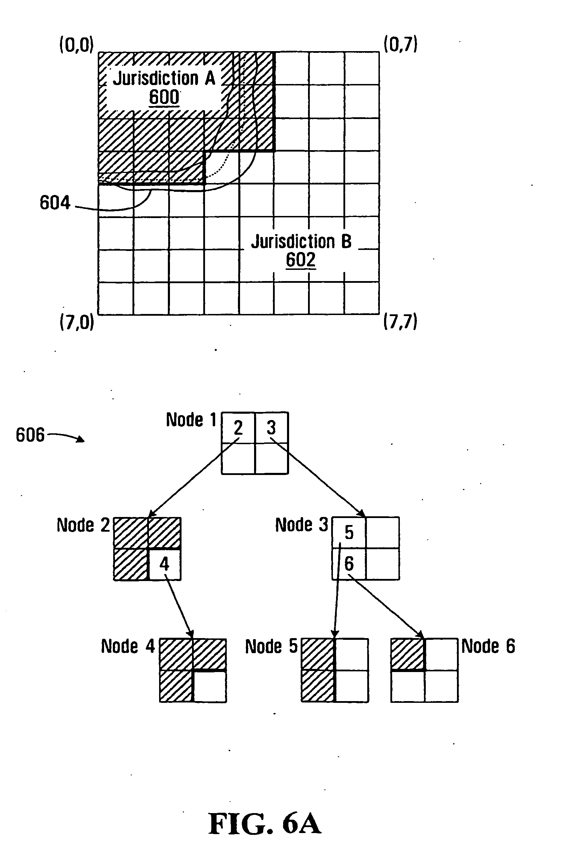

Figure 6A shows an example of how a lookup might proceed in an 8 x 8 pixel graphic. In this case, the graphic is shown divided into two jurisdictions, namely jurisdiction A 600 and jurisdiction B 602. The figure also shows that the jurisdictions are divided by a river 604. In this example, each pixel represents about 3 metres squared which is about the useful limit of normal GPS resolution. Jurisdiction boundaries will not be precisely smooth since they must conform to pixel boundaries.

The resulting quadtree is generally indicated at 606 and is completely defined by six nodes labelled Node 1, Node 2, Node 3, Node 4, Node 5, Node 6. Node 1 shows the original graphic divided into four quadrants. All co-ordinates in the lower right quadrant have jurisdiction B. Similarly, all co-ordinates in the upper left quadrant point to Node 2 which shows three quadrants that are completely within jurisdiction A, and a fourth quadrant that points to Node 4. Node 4 shows three quadrants in jurisdiction A and a fourth quadrant entirely in jurisdiction B. Similarly, the upper right hand quadrant of Node 1 points to Node 3. In Node 3, the two right hand quadrants all have jurisdiction B. The upper left hand quadrant points to Node 5 and the lower left quadrant points to Node 6. In Node 5, the two left quadrants are jurisdiction A while the two right quadrants are jurisdiction B. In Node 6, the upper left quadrant is jurisdiction A while the remaining quadrants are jurisdiction B. At this point, all of the quadrants have a single colour and as such no further breakdown is required.

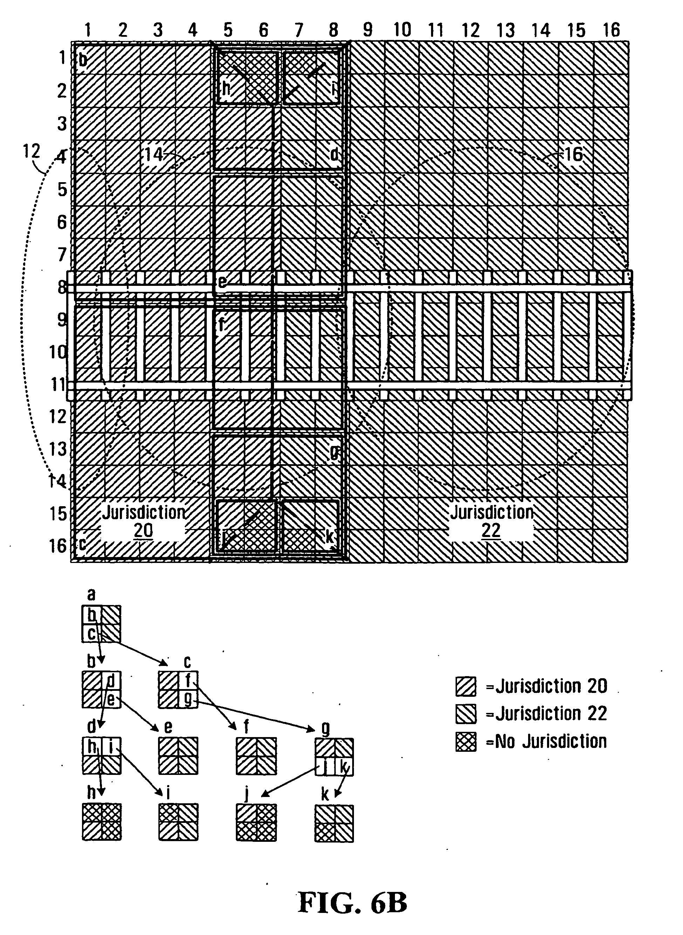

With this particular example, a quadtree for an 8 x 8 pixel graphic has been illustrated. The obvious way to store information for each pixel of an 8 x 8 graphic would require a 64 byte matrix, assuming one byte per pixel of colour data. In contrast, with the above-described method of storage, only 24 bytes are required, assuming an optimal arrangement of pointers and one byte pixel colour data as a quadrant array. In this particular instance, a maximum of three compares is required for retrieval while some co-ordinates require only a single compare. Another example is shown in Figure 6B where a quadtree for a train yard having jurisdictions 20, 22 and cells 12, 14, 16 is shown. The colour is then used to map to the particular dispatcher.

The choice of spatial storage structure is in this case a quadtree, but other hierarchical spatial representations can alternatively be employed. For example, a structure could be employed to reference regions within a hexagonal mesh. The quadtree is preferred and detailed here because of the simplicity of the calculations that results from the direct correlation of the measurements axis with the pixel axis.

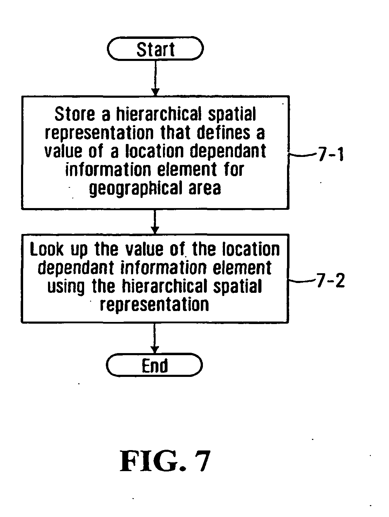

The above-described embodiments have focussed on GSM-R applications. More generally, the methods described herein can be applied to any system in which a lookup of a value of a particular location dependent information element needs to be performed. Referring to the flowchart of Figure 7, the method generally involves storing a hierarchical spatial representation that defines a value of a location dependent information element for a geographical coverage area. In particular examples that were given above, the location dependent information element was one of various functional entities such as dispatchers or power controllers, and the hierarchical spatial representation as a quadtree that stores a colour or other graphical display characteristic for each jurisdiction that is mappable to a respective instance of the functional entity. However, the method can be applied to any location dependent information elements, and other hierarchical spatial representations can be employed. Storage of the location dependent information element using a hierarchical spatial representation is done at step 7-1. At step 7-2, for a particular location within the geographical coverage area, the value of the location dependent information element is looked up using the hierarchical spatial representation.

The method of Figure 7 may be implemented in any one or appropriate combination of hardware, firmware, and software. Preferably, implementations allow automatic execution.

In a particular implementation, step 7-1 above involves storing a graphic consisting of a set of polygons each having a respective colour that is associated with a respective value of the location dependent information element. The hierarchical spatial representation defines and stores the colour of each pixel in the graphic.

To use the graphic stored as such, the particular location can be converted into co-ordinates of a pixel within the graphic. The colour of the pixel is then determined using the stored hierarchical spatial representation and the colour of the pixel is mapped to the location dependent information element.

The use of colour is a human factors requirement that enables the visualization of the jurisdiction map. The colours allow a human correlation of a jurisdiction to a map region. A geographical information system can then create a pixel based graphic where each colour's pixel represents a particular jurisdiction. The pixel based graphic is then converted into a quadtree which encodes the pixel colour information, which also still represents jurisdictions, into an efficient reference structure.

As indicated above, colour or more generally graphical display characteristics can be employed to allow a visualization of the jurisdiction map. More generally, assuming either that visualization is not a requirement, or independent visualization system is available, the quadtree can be used to store any information that represents the jurisdictions/location dependent information elements. This can be information that requires a further mapping to determine the jurisdiction/location dependent information element as was the case for colour, or the information can be full or partial jurisdiction/location dependent information per se.

Preferably, the information as looked up includes, potentially among other information, connection information that allows for a connection to be made to a destination functional entity. For example, the connection information might be a telephone number of a particular location dependent functional entity. Alternatively it could be an IP address, SIP URI, SS7 Point Code or any appropriate network element identifier. For the particular detailed example given above where the quadtree is used to lookup a particular dispatcher, the connection information can consist of connection information for use in the GSM-R numbering plan. The connection information can be a functional number, which can be further resolved by the GSM-R network into a physical number (either an MSISDN or ISDN number), or a physical MSISDN or ISDN number may be directly returned.

In some embodiments the method further involves initiating the establishment of a connection between the calling device and the geographically dependent functional entity. This may involve performing a call set up for example.

In some implementations, a respective quadtree is stored for each of a set of different location dependent information elements. For example, a first quadtree might be stored for dispatchers while a second quadtree stored for power controllers. More generally, multiple quadtrees can be stored for any set of location dependent information elements. In that case, in order to perform the lookup, the location is required, but also a selection of a particular one of the location dependent information elements is required. In the above example, this has been achieved by the end user dialing a particular short code. However, more generally any appropriate mechanism for selecting a particular one of the location dependent information elements to lookup can be employed.

In the detailed examples above, the location information has consisted of GPS data. More generally, this can be any location information that defines the location of the calling party to the requisite resolution. This may come in the form of latitude and longitude, but does not necessarily need to so long as whatever form the location information takes, it can be mapped to the quadtree. In some embodiments, coarse location information is used to determine which of a plurality of different quadtrees to use. In the above detailed description, a particular example of this was given where a cell identifier was used to decide which of a set of maps to use.

In some embodiments, the quadtree-based lookup functionality is implemented in a service control point. Service control points are a well-known mechanism providing additional functionality outside the central controller or switch. Upon receipt of a call set up request or other communication, the relevant network element will trigger a query to the SCP. In the particular example, the trigger to initiate activities on the SCP will be receipt of a particular short code. However, other triggers can alternatively be employed. More generally, it is readily apparent that the lookup function does not need to be implemented in a SCP and may or may not involve the use of a trigger-based mechanism. It is most efficient to implement the lookup a single time in a centrally located manner. However, if storage space were less of a requirement, the lookup information could be replicated in multiple distributed locations. For example, the function might be implemented in base stations, base station controllers or mobile switching centres to name a few examples. The particular MSC BSC BTS hierarchy is a particular example of how GSM-R systems might be implemented. Other network hierarchies can alternatively be employed.

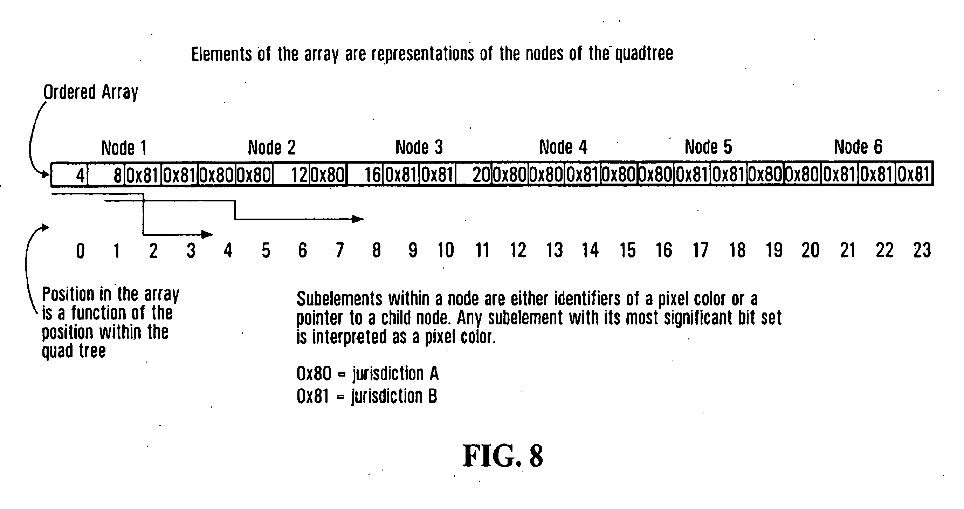

Figure 8 shows a specific example of how a data structure might be stored for the example quadtree of Figure 6A. The arrangement of an array of the six nodes is shown such that position in the array is a function of the position within the quadtree. Subelements within a node are either identifiers of a pixel color or a pointer to a child node. Any subelement with its most significant bit set is interpreted as a pixel color. The array has four subelements for each node. For example, with respect to Node 1, the first subelement contains a pointer to Node 2, which is located at position 4. The second subelement contains a pointer to Node 3, which is located at position 8. The third and fourth subelements contain 0x81, which indicates that the third and fourth quadrants are in jurisdiction B.

It is to be understood that the example discussed with reference to Figure 8 is a very specific example. There are many ways that a quadtree can be stored. Any suitable data structure allowing reading and writing of the quadtree may be implemented.

Another embodiment provides a computer readable medium having computer executable instructions stored thereon for implementing the methods described herein.

Numerous modifications and variations of the present invention are possible in light of the above teachings. It is therefore to be understood that within the scope of the appended claims, the invention may be practiced otherwise than as specifically described herein.

## Claims

1. A method for location-dependent addressing in a wireless access network (24) having cells with cell identifiers, comprising:
receiving a call setup request requesting a connection between a calling device (32, 400, 516) and a location-dependent functional entity;
looking up (7-2) connection information to a particular instance (34, 41C) of the location-dependent functional entity as a function of the location of the calling device (32, 400, 516); and
using the connection information for initiating the establishment of a connection between said calling device (32, 400, 516) and said instance (34, 410) of the location-dependent functional entity;
**characterized by**:
for at least one location-dependent functional entity, storing (7-1) a plurality of hierarchical spatial representations in the form of quadtrees (100, 606) each defining different connection information;
using the cell identifier of the cell the calling device (32, 400, 516) resides in to determine which of the plurality of quadtrees (100, 606) to use in said step of looking up (7-2).

2. The method of claim 1, **characterized in that** the particular location-dependent functional entity is identified by a GSM-R short code.

3. The method of claim 1 or 2, **characterized in that** the location of the calling device (32, 400, 516) is identified by latitude and longitude information.

4. The method of any one of claims 1 to 3, **characterized in that** storing the quadtrees (100, 606) comprises storing higher resolution nodes (112, 114, 116, 118, 120) in the quadtrees (100, 606) for areas where a higher resolution location-based look-up (7-2) is to be provided.

5. The method of any one of claims 1 to 4 implemented in a service control point (406, 530).

6. A system for location-dependent addressing for a wireless access network (24) having cells with cell identifiers, configured to receive a call setup request requesting a connection between a calling device (32, 400, 516) and a location-dependent functional entity, to look-up (7-2) connection information to a particular instance (34, 410) of the location-dependent functional entity as a function of the location of the calling device (32, 400, 516), and to use the connection information for initiating the establishment of a connection between said calling device (32, 400, 516) and said instance (34, 410) of the location-dependent functional entity; **characterized by**:
means for storing (7-1), for at least one location-dependent functional entity, a plurality of hierarchical spatial representations in the form of quadtrees (100, 606) each defining different connection information, and
means for using the cell identifier of the cell the calling device (32, 400, 516) resides in to determine which of the plurality of quadtrees (100, 606) to use in said look-up (7-2).

7. The system of claim 6, **characterized in that** the system is a GSM-R system.

8. The system of claims 6 or 7, **characterized in that** the location of the calling device (32, 400, 516) is identified by latitude and longitude information.

9. The system of any one of claims 6 to 8, **characterized in that** the quadtree-based look-up (7-2) is implemented in a service control point (406, 530).

10. One or more computer readable media having computer executable instructions for executing the method of any of claims 1 to 5.

## Patentansprüche

1. Verfahren zur ortsabhängigen Adressierung in einem Netzwerk (24) mit drahtlosem Zugriff, das Zellen mit Zellenkennungen hat, umfassend:
Empfangen einer Verbindungsaufbauanfrage, die eine Verbindung zwischen einem anrufenden Gerät (32, 400, 516) und einer ortsabhängigen Funktionseinheit anfordert;
Suchen (7-2) von Verbindungsinformation zu einer spezifischen Instanz (34, 410) der ortsabhängigen Funktionseinheit in Abhängigkeit vom Ort des anrufenden Geräts (32, 400, 516); und
Verwenden der Verbindungsinformation zum Initiieren der Herstellung einer Verbindung zwischen dem genannten anrufenden Gerät (32, 400, 516) und der genannten Instanz (34, 410) der ortsabhängigen Funktionseinheit;
**gekennzeichnet durch**:
für zumindest eine ortsabhängige Funktionseinheit, Speichern (7-1) einer Vielzahl von hierarchischen räumlichen Darstellungen in Form von Quadtrees (100, 606), die jeweils unterschiedliche Verbindungsinformationen definierten;
Verwenden der Zellenkennung der Zelle, in der sich das anrufende Gerät (32, 400, 516) befindet, zum Bestimmen, welcher der Vielzahl von Quadtrees (100, 606) im genannten Schritt des Suchens (7-2) zu verwenden ist.

2. Verfahren nach Anspruch 1, **dadurch gekennzeichnet, dass** die spezifische ortsabhängige Funktionseinheit durch einen GSM-R-Kurzcode identifiziert wird.

3. Verfahren nach Anspruch 1 oder 2, **dadurch gekennzeichnet, dass** der Ort des anrufenden Geräts (32, 400, 516) durch Breiten- und Längeninformationen identifiziert wird.

4. Verfahren nach einem der Ansprüche 1 bis 3, **dadurch gekennzeichnet, dass** das Speichern der Quadtrees (100, 606) ein Speichern höher aufgelöster Knoten (122, 114, 116, 118, 120) in den Quadtrees (100, 606) für Gebiete, wo eine höher auflösende ortsbasierende Suche (7-2) vorzusehen ist, umfasst.

5. Verfahren nach einem der Ansprüche 1 bis 4, das in einem Dienstausführungspunkt (406, 530) implementiert ist.

6. System zur ortsabhängigen Adressierung für ein Netzwerk mit drahtlosem Zugriff (24), das Zellen mit Zellenkennungen hat, das ausgebildet ist zum Empfangen einer Verbindungsaufbauanfrage, die eine Verbindung zwischen einem anrufenden Gerät (32, 400, 516) und einer ortsabhängigen Funktionseinheit anfordert, zum Suchen (7-2) von Verbindungsinformation zu einer spezifischen Instanz (34, 410) der ortsabhängigen Funktionseinheit in Abhängigkeit vom Ort des anrufenden Geräts (32, 400, 516) und zum Verwenden der Verbindungsinformation zum Initiieren der Herstellung einer Verbindung zwischen dem genannten anrufenden Gerät (32, 400, 516) und der genannten Instanz (34, 410) der ortsabhängigen Funktionseinheit; **gekennzeichnet durch**:
Mittel zum Speichern (7-1) einer Vielzahl von hierarchischen räumlichen Darstellungen in Form von Quadtrees (100, 606), die jeweils unterschiedliche Verbindungsinformation definieren, für zumindest eine ortsabhängige Funktionseinheit, und
Mittel zum Verwenden der Zellenkennung der Zelle, in der sich das anrufende Gerät (32, 400, 516) befindet, zum Bestimmen, welcher der Vielzahl von Quadtrees (100, 606) bei der genannten Suche (7-2) zu verwenden ist.

7. System nach Anspruch 6, **dadurch gekennzeichnet, dass** das System ein GSM-R-System ist.

8. System nach Anspruch 6 oder 7, **dadurch gekennzeichnet, dass** der Ort des anrufenden Geräts (32, 400, 516) durch Breiten- und Längeninformationen identifiziert wird.

9. System nach einem der Ansprüche 6 bis 8, **dadurch gekennzeichnet, dass** die Quadtree-basierende Suche (7-2) in einem Dienstausführungspunkt (406, 530) implementiert ist.

10. Ein oder mehrere computerlesbare Medien mit computerausführbaren Instruktionen zum Ausführen des Verfahrens nach einem der Ansprüche 1 bis 5.

## Revendications

1. Procédé d'adressage basé sur la localisation dans un réseau d'accès sans fil (24) présentant des cellules avec des identificateurs de cellule, comprenant:
recevoir une demande d'établissement d'appel demandant une connexion entre un dispositif appelant (32, 400, 516) et une entité fonctionnelle basée sur la localisation;
rechercher (7-2) des informations de connexion sur une instance particulière (34, 410) de l'entité fonctionnelle basée sur la localisation en fonction de la localisation du dispositif appelant (32, 400, 516); et
utiliser les informations de connexion pour amorcer l'établissement d'une connexion entre ledit dispositif appelant (32, 400, 516) et ladite instance (34, 410) de l'entité fonctionnelle basée sur la localisation;
**caractérisé par**:
pour au moins une entité fonctionnelle basée sur la localisation, enregistrer (7-1) une pluralité de représentations spatiales hiérarchiques sous la forme d'arbres quaternaires (100, 606), chacun définissant différentes informations de connexion;
utiliser l'identificateur de cellule de la cellule dans laquelle le dispositif appelant (32, 400, 516) se trouve pour déterminer quel arbre parmi la pluralité d'arbres quaternaires (100, 606) utiliser dans ladite étape consistant à rechercher (7-2).

2. Procédé selon la revendication 1, **caractérisé en ce que** l'entité fonctionnelle particulière basée sur la localisation est identifiée par un bref code GSM-R.

3. Procédé selon la revendication 1 ou 2, **caractérisé en ce que** la localisation du dispositif appelant (32, 400, 516) est identifiée par des informations de latitude et de longitude.

4. Procédé selon l'une quelconque des revendications 1 à 3, **caractérisé en ce que** l'étape consistant à enregistrer les arbres quaternaires (100, 606) comprend l'enregistrement de noeuds à plus haute résolution (112, 114, 116, 118, 120) dans les arbres quaternaires (100, 606) pour des zones où une recherche basée sur la localisation à plus haute résolution (7-2) doit être prévue.

5. Procédé selon l'une quelconque des revendications 1 à 4, réalisé dans un point de commande de service (406, 530).

6. Système d'adressage basé sur la localisation pour un réseau d'accès sans fil (24) présentant des cellules avec des identificateurs de cellule, configuré pour recevoir une demande d'établissement d'appel demandant une connexion entre un dispositif appelant (32, 400, 516) et une entité fonctionnelle basée sur la localisation, pour rechercher (7-2) des informations de connexion sur une instance particulière (34, 410) de l'entité fonctionnelle basée sur la localisation en fonction de la localisation du dispositif appelant (32, 400, 516), et pour utiliser les informations de connexion pour amorcer l'établissement d'une connexion entre ledit dispositif appelant (32, 400, 516) et ladite instance (34, 410) de l'entité fonctionnelle basée sur la localisation; **caractérisé par**:
des moyens pour enregistrer (7-1), pour au moins une entité fonctionnelle basée sur la localisation, une pluralité de représentations spatiales hiérarchiques sous la forme d'arbres quaternaires (100, 606), chacun définissant différentes informations de connexion, et
des moyens pour utiliser l'identificateur de cellule de la cellule dans laquelle le dispositif appelant (32, 400, 516) se trouve pour déterminer quel arbre parmi la pluralité d'arbres quaternaires (100, 606) utiliser dans ladite étape consistant à rechercher (7-2).

7. Système selon la revendication 6, **caractérisé en ce que** le système est un système GSM-R.

8. Système selon la revendication 6 ou 7, **caractérisé en ce que** la localisation du dispositif appelant (32, 400, 516) est identifiée par des informations de latitude et de longitude.

9. Système selon l'une quelconque des revendications 6 à 8, **caractérisé en ce que** la recherche basée sur les arbres quaternaires (7-2) est réalisée dans un point de commande de service (406-530).

10. Un ou plusieurs média lisibles par ordinateur présentant des instructions exécutables par ordinateur pour l'exécution du procédé selon l'une quelconque des revendications 1 à 5.
